# EUROPÄISCHE PATENTANMELDUNG

(11) **EP 1 413 364 A2**
(43) Veröffentlichungstag der Anmeldung: **28.04.2004**
(21) Anmeldenummer: 03405625.9
(22) Anmeldetag: 29.08.2003
(51) Int. Cl.: B05D 1/06, B05D 7/04

(54) **Verfahren und Vorrichtung zur Herstellung eines folienförmigen Verpackungsmaterials**

(30) Priorität: 07.10.2002 EP 02405866; 25.11.2002 EP 02406019
(71) Anmelder: Alcan Technology & Management Ltd., 8212 Neuhausen am Rheinfall (CH)
(72) Erfinder: Nägeli, Hans-Rudolf, 8212 Neuhausen (CH); Rosenberger, Karolina, 8218 Osterfingen (CH); Frey, Jürg, 9014 St. Gallen (CH); Bönsch, Fabian, 8212 Neuhausen (CH)

(57) **Zusammenfassung**

Die Erfindung betrifft ein Verfahren zur Herstellung eines flexiblen Verpackungsmaterials aus einer ein- oder mehrschichtigen Folie oder Folienverbund (7) enthaltend eine auf wenigsten einer freien Oberfläche der Folie oder des Folienverbundes aufgebrachte Siegelschicht (14) aus pulverförmigen Ausgangsstoffen. Die Erfindung zeichnet sich dadurch aus, dass die Siegelschicht (14) teilflächig auf den zu siegelnden Flächenabschnitten aufgebracht wird, und der Auftrag der Siegelschicht mittels eines elektrostatischen Beschichtungsverfahrens erfolgt, in welchem Beschichtungsteilchen elektrostatisch geladen und mittels Transfermitteln durch Anlegen eines elektrischen Feldes auf die zu beschichtende Folienoberfläche übertragen und zu einem Beschichtungsfilm in Form einer Siegelschicht aufgeschmolzen und/oder gehärtet werden.

## Beschreibung

Vorliegende Erfindung betrifft ein Verfahren zur Herstellung eines folienförmigen Verpackungsmaterials, eine Vorrichtung zur Ausführung des Verfahrens sowie die Verwendung des Verpackungsmaterials.

Verpackungen mit Siegelnaht-Verschlüssen haben eine weite Verbreitung, da die Herstellung solcher Verschlüsse äusserst einfach und kostengünstig ist und bsp. den Anforderungen an Einweg-Verpackungen in vielen Fällen genügen.

Die Herstellung von sogenannten Siegellackschichten auf Folien oder Folienverbunden geschieht in der Regel mittels herkömmlichen Lackauftragsverfahren, wie z.B. mittels Walzbeschichtung, Tauchbeschichtung oder Düsenbeschichtung. Ferner ist auch bekannt, Siegellackschichten mittels Tiefdruckverfahren aufzubringen. Der Lackauftrag ist in der Regel vollflächig. Dies bedeutet, dass auch Flächenabschnitte des Verpackungsmaterials mit einer Siegellackschicht versehen werden, welche gar nicht als Siegelflächen vorgesehen sind. Bei Anwendung eines genannten Tiefdruckverfahrens ist es auch möglich die Siegellackschicht teilflächig aufzutragen.

Die Siegellackschichten sind bsp. Kalt- oder Heisssiegellacke. Kaltsiegellacke sind in der Regel auf Latex-Basis aufgebaut und werden insbesondere für wärmeempfindliche Güter angewendet. Heisssiegellacke, welches wärmeaktivierbare Klebstoffe sind, liegen bsp. als Polymere vor. Sie werden in der Regel in der Form von Lösungen (Lacke) oder in Form von Folien aus einem Polymer-Werkstoff auf das Verpackungsmaterial aufgebracht.

Die herkömmlichen Herstellungsverfahren weisen den Nachteil auf, dass die Siegelschichten bzw. Siegellackschichten nur vollflächig oder nur beschränkt teilflächig aufgetragen werden können. Ferner ist das Einrichten der Produktionsmittel für einen teilflächigen Auftrag der Siegellackschicht z.B. mittels eines Tiefdruckverfahrens aufwendig, so dass der teilflächige Auftrag nicht beliebig geändert werden kann. Ferner sind lösungsmittelhaltige Lacke für die Umwelt nicht ganz unproblematisch und sollten daher durch lösungsmittelfreie Beschichtungssysteme ersetzt werden.

Aufgabe vorliegender Erfindung ist es daher, ein Herstellungsverfahren sowie eine Vorrichtung vorzuschlagen, welche den teilflächigen Auftrag von Siegellackschichten bzw. Siegelschichten erlauben, wobei das Bildmuster des teilflächigen Siegelschichtauftrags ohne übermässigen Kosten- und Zeitaufwand veränderbar sein soll.

Die Aufgabe wird dadurch gelöst, dass die Siegelschicht teilflächig auf den zu siegelnden Flächenabschnitten aufgebracht wird, und der Auftrag der Siegelschicht mittels eines elektrostatischen Beschichtungsverfahrens erfolgt, in welchem Beschichtungsteilchen elektrostatisch geladen und mittels Transfermitteln durch Anlegen eines elektrischen Feldes auf die zu beschichtende Folienoberfläche übertragen und zu einem Beschichtungsfilm in Form einer Siegelschicht aufgeschmolzen und anschliessend verfestigt werden.

Die Siegelschicht ist vorzugsweise eine Heisssiegelschicht. Die Ausgangsstoffe zur Herstellung der Siegelschicht mittels elektrostatischem Verfahren liegen in Form von Trockenteilchen, d.h. pulverförmigen Teilchen, und bevorzugt in Form eines Pulverlackes (powder paint) vor. Die Beschichtungsteilchen weisen zweckmässig tribo-elektrische Eigenschaften auf, d.h. sie lassen sich elektrostatisch aufladen.

Die Pulverteilchen bzw. die Pulverlackpartikel bestehen bzw. enthalten bevorzugt ein schmelzfähiges, thermoplastisches Polymer. Die Pulverteilchen bzw. die Pulverlackpartikel können ferner tribo-modifiziert sein, d.h. die Partikel enthalten Zusatzstoffe, durch welche die Partikel mittels Reibung besonders gut elektrostatisch aufladbar sind. Die Pulverteilchen bzw. die Pulverlackpartikel können ferner Zusatzstoffe, wie Füllmaterial, Pigmente, Antioxidantien oder Stabilisatoren sowie weitere funktionelle Zusätze enthalten. Die Verwendung von Pulverteilchen bzw. Pulverlacken ermöglicht den Einsatz lösungsmittelfreier Beschichtungs-Systeme.

Die Heisssiegelschichten als wärmeaktivierbare Klebstoffe sind bsp. (Co-) Polymere auf der Basis von Polyolefinen, wie Ethylen, (Meth)acrylaten, Vinylchlorid, Vinylidenchlorid, und Vinylacetat, sowie Polyamide, Polyester und Polyurethane, sowie Mischungen (Polyblends) davon.

Die Heisssiegelschicht kann bsp. ein Polyvinylchlorid (PVC), ein Polyvinylidenchlorid (PVDC), ein Copolymer des PVC, insbesondere ein Copolymer des PVC mit einem Acrylatharz, ein Polypropylen (PP), ein Polyester, ein Polychlortrifluorethylen (PCTFE) oder ein Cycloolefin-Copolymer (COC) enthalten oder daraus bestehen.

Die Pulverteilchen bzw. Pulverlackpartikel aus einem thermoplastischen Polymer werden nach Auftrag mittels elektrostatischem Verfahren auf die Folie oder den Folienverbund unter Wärmezufuhr aufgeschmolzen und formieren sich zu einem flächigen Beschichtungsfilm, welcher sich unter Abkühlung zu einer nichtklebenden Heisssiegelschicht verfestigt. Die Klebeigenschaften der Heisssiegelschicht werden erst durch Aufschmelzen unter Wärmezufuhr beim Siegelvorgang wieder aktiviert.

Die Pulverteilchen bzw. Pulverlackpartikel werden hierbei in bevorzugter Ausführung der Erfindung nach dem Übertrag auf das Substrat (Kunststofffolie) in einer sogenannten Heiz-Einheit z.B. mittels IR- (Infrarot) Strahlung oder NIR- (nahes Infrarot) Strahlung, insbesondere mittels beheizten Walzen, auf z.B. 70 - 80°C, erwärmt und aufgeschmolzen. Durch das Aufschmelzen wird ein feiner gleichmässiger, auf dem Substrat haftender Film ausgebildet. Die Heizeinheit ist zweckmässig der Siegelschichtstation, in welcher die Siegelschicht aufgebracht wird, zugeordnet.

Der teilflächige Auftrag der Siegelschicht geschieht bevorzugt mittels eines elektrophotographischen Verfahrens. Die Siegelschichtstation enthält hierzu bevorzugt Mittel zur elektronischen Datenverarbeitung, welche den gezielten, teilflächigen Auftrag der Siegelschicht auf der Basis einer Bildvorlage erlauben.

Die Siegelschichtstation kann ferner Mittel zur elektronischen Datenverarbeitung enthalten, mittels welchen die aufzutragenden Schichtdicke überwacht und/oder gesteuert werden kann. Die Steuerung der aufzutragenden Schichtdicke bzw. des teilflächigen Schichtauftrags geschieht bevorzugt mittels Digitaldrucktechnik.

Der teilflächige Schichtauftrag basiert zweckmässig auf einer die Anordnungsstruktur der zu siegelnden Flächenabschnitte wiedergebenden Bildvorlage. Die Daten der Bildvorlage liegen vorzugsweise als Digitalgrössen vor und werden beispielsweise mittels Desktop-Publishing, d.h. mittels Programmen zur Bildverarbeitung oder dergl. unter Verwendung von Anlagen zur Elektronischen Datenverarbeitung (EDV) erzeugt oder überarbeitet.

Die Daten können beispielsweise auf einem magnetischen, magneto-optischen oder optischen Speichermedium gespeichert sein. Es ist auch möglich, in Form von Analogdaten vorliegende Bildvorlagen unter Einsatz entsprechender Mittel, wie EDV-Anlagen und Datenverarbeitungsprogramme (z.B. Scanner-Geräte), elektronisch zu erfassen und mittels eines Analog-Digital-Umsetzers in Digitalsignale umzuwandeln und weiterzuverarbeiten. Die als digitale Grössen vorliegende Daten der Bildvorlage werden zweckmässig über ein elektrophotographisches Verfahren in Form des genannten teilflächigen Schichtauftrags auf die Folie oder den Folienverbund reproduziert.

Die Bildvorlagen können durch digitale Aufbereitung unter Verwendung entsprechender Datenverarbeitungsprogramme mit Hilfe von EDV beinahe uneingeschränkt bearbeitet und geändert werden.

Die Dicke der Siegelschicht beträgt beispielsweise 7 - 100 µm und insbesondere 10 - 50 µm. Die Siegelschichten können auf einer oder beiden freien Oberflächen der Folie oder des Folienverbundes aufgebracht werden.

Die Siegelschicht kann mittels einer Beschichtungsstation in Ausführung eines integralen Moduls einer Foliendurchlaufproduktionsanlage inline aufgebracht werden. Die Beschichtung der Folie mit einer Siegelschicht erfolgt bevorzugt in einem kontinuierlichen Foliendurchlaufverfahren. Die besagte Produktionsanlage kann weitere inline angeordnete Stationen, wie eine Druckstation, eine Kaschierstation und/oder eine Drucküberlackbeschichtungsstation, enthalten. Ferner kann der Foliendurchlaufproduktionsanlage eine Schneidstation und/oder eine Verpackungsstation nachgeordnet sein, in welchen die endlose Verpackungsfolie zugeschnitten und zu Verpackungen weiterverarbeitet wird.

Die Siegelschichtstation enthält bevorzugt eine Beschichtungseinheit, in welcher die Siegelschicht mittels des genannten elektrostatischen Verfahrens teilflächig auf die Folie oder den Folienverbund aufgetragen wird, sowie eine der Beschichtungseinheit nachgeordnete Heizeinheit, in welcher die Beschichtung, insbesondere die Pulverlackbeschichtung, unter Wärmeeinwirkung zu einem an der Folienoberfläche haftenden gleichmässigen Siegelfilm aufgeschmolzen und nachfolgend unter Abkühlung verfestigt wird.

Der erfindungsgemäss hergestellte Folienverbund kann aus Monofolien oder mehrschichtigen Folien bzw. Folienverbunden hergestellt sein. Die Folien können z.B. aus Metall (Metallfolien, Metalldünnschichten), Papier, Kunststoff oder einer Kombination davon sein. Der Folienverbund kann Materialschichten aus Papier, Metall oder Kunststoff enthalten. Beispiele von Metallfolien als Verpackungswerkstoff sind Folien aus Eisen, Stahl, Kupfer und bevorzugt aus Aluminium und seinen Legierungen.

Wird die Siegellackschicht teilflächig auf eine Aluminiumfolie aufgebracht, so ist darauf zu achten, dass wenigstens die nicht durch die Siegellackschicht bedeckten Flächenbereiche der Aluminiumfolie zur Vermeidung von Reibkorrosion mit einer Vorbehandlungsschicht, vorzugsweise einer Vorbehandlungsschicht aus einem Polymer, wie einem Vorlack, beschichtet sind.

Geeignete Kunststoffe für Kunststofffilme bzw. -Schichten sind z.B. Polyvinylchlorid (PVC), Polyvinylidenchlorid (PVDC), Polyester, Polycarbonate, Polyvinylacetate, Polyolefine und besonders Polyethylene (PE), dann auch Polypropylene (PP) und Polyamide (PA). Weitere, hier nicht aufgeführte Kunststoffe sind ebenfalls denkbar.

Die Dicke des Verpackungsmaterials kann beispielsweise von 5 µm bis 1000 µm betragen. Zweckmässig sind Dicken von 15 bis 200 µm. Die Folien bzw. der Folienverbund kann auch Barriereschichten, z.B. keramische Dünnschichten, enthalten.

Die Erfindung betrifft auch eine Produktionsvorrichtung zur Herstellung eines flexiblen Verpackungsmaterials aus einer ein- oder mehrschichtigen Folie oder Folienverbund, wobei die Produktionsvorrichtung eine Foliendurchlaufproduktionsanlage mit einer Siegelschichtstation zum Aufbringen einer Siegelschicht auf wenigstens eine freie Oberfläche des Verpackungsmaterials enthält.

Die Produktionsvorrichtung zeichnet sich dadurch aus, dass die Siegelschichtstation Mittel zur Beschichtung der Folien oder des Folienverbundes mittels eines elektrostatischen Beschichtungsverfahrens enthält.

Die Mittel zur elektrostatischen Beschichtung enthalten zweckmässig Mittel zur elektrostatischen Aufladung der Beschichtungsteilchen und Mittel zum Transferieren der elektrostatisch geladenen Beschichtungsteilchen auf die zu beschichtende Folienoberfläche (Substrat).

Die Mittel zum Transferieren der elektrostatisch geladenen Beschichtungsteilchen umfassen vorzugsweise eine rotierbare Transferwalze oder Transferband, auf welche die elektrostatisch geladenen Beschichtungsteilchen mittels elektrostatischen Kräften aufgebracht werden, sowie Mittel zum Anlegen eines elektrischen Feldes zur Übertragung der elektrostatisch geladenen Beschichtungsteilchen von der Transferwalze oder Transferband auf die zu beschichtende Folienoberfläche.

Die Beschichtungsteilchen können hierzu beispielsweise Teil eines Zweikomponenten-Entwicklersystems mit einem Carrier sein. Die Beschichtungsteilchen können jedoch auch Teil eines Einkomponenten-Entwicklersystems sein. Entwicklersystem bedeutet hier ein Auftragssystem, gemäss welchem die Teilchen auf das zu beschichtende Substrat aufgebracht werden. Entwicklersystem hat in diesem Fall nichts mit der Aushärtung der Siegelschicht selbst zu tun.

Die Übertragung der Beschichtungsteilchen auf die Folienoberfläche geschieht bevorzugt mittels eines Verfahrens nach der sogenannten EMB-Technologie (Elektro-Magnetic Brush Technology), wie sie insbesondere bei Zweikomponenten-Entwicklersystem zum Einsatz kommt. Ein sogenannter Carrier besteht hier aus ferromagnetischen Teilchen, wobei die Beschichtungsteilchen durch triboelektrische Kräfte an den Carrier gebunden werden. Das aus dem Carrier und den daran haftenden Beschichtungsteilchen bestehende Entwickler-System wird über eine rotierende der Transferwalze oder Transferband gegenüberliegende Magnetwalze aufgetragen. Durch die zwischen der Magnetwalze und dem Carrier wirkenden magnetischen Kräfte wird das Entwickler-System kettenförmig an die Magnetwalze gezogen und bildet eine bürstenartige Anordnung, auch Magnetbürste genannt, aus. Die Magnetbürste überstreicht die Transferwalze und erzeugt einen sogenannter Bürsten-Effekt, durch welchen die Beschichtungsteilchen mit Hilfe elektrostatischer Kräfte auf die elektrisch geladene Oberfläche der Transferwalze überführt werden.

Im Übertragungsschritt werden die Beschichtungsteilchen, z. B. mittels Koronaentladungen, von der Transferwalze direkt oder indirekt auf das zu beschichtende Substrat transferiert. Die Beschichtungsteilchen werden anschliessend, gegebenenfalls im aufgeschmolzenen Zustand, an das Substrat fixiert.

Das elektrostatische Verfahren zum teilflächigen Auftrag der Siegelschicht ist bevorzugt ein elektrophotographisches Beschichtungsverfahren. Die Transferwalze ist hier als Phototräger ausgebildet und liegt vorzugsweise als Trommel, Walze oder Transferband vor. Der Phototräger ist an seiner Oberfläche mit einem Photoleiter beschichtet. An einer Koronaentladungsstation wird die photoleitende Oberflächenschicht des Phototrägers in Dunkelheit gleichmässig aufgeladen. Die photoleitende Schicht wird einer die Bildvorlage als Belichtungsbild wiedergebenden Lichtquelle ausgesetzt, wobei der belichtete Teil der photoleitenden Schicht entladen wird. Ein der Bildvorlage entsprechendes Ladungsbild entsteht.

Im Entwicklungsschritt werden die elektrostatisch geladenen Beschichtungsteilchen auf das Ladungsbild übertragen, wobei die der Ladung der photoleitenden Schicht entgegengesetzt geladenen Beschichtungsteilchen durch die wirkenden elektrostatischen Kräfte unter Wiedergabe der Bildvorlage auf das Ladungsbild auf dem Phototräger gezogen werden. Die Beschichtungsteilchen werden hernach über elektrostatische Anziehung vom Phototräger direkt oder indirekt auf das Substrat übertragen.

Unter einem elektrophotographischen Verfahren fallen definitionsgemäss unter anderem direkte und indirekte elektrophotographische Verfahren, wie z.B. die Xerographie, wobei bevorzugt ein indirekters elektrophotographisches Verfahren, insbesondere ein Xerographie-Verfahren, angewendet wird.

Die Siegelschichtstation enthält bevorzugt Mittel zur elektronischen Datenverarbeitung zwecks Überwachung und/oder Steuerung eines teilflächigen Schichtauftrages und/oder zur Überwachung und/oder Steuerung der Schichtdicken. Ferner enthält die Siegelschichtstation zweckmässig Mittel zur Bildverarbeitung.

Die Bildverarbeitungsmittel umfassen bevorzugt Mittel zur elektronischen Datenverarbeitung (EDV), insbesondere Bildverarbeitungsprogramme zur Herstellung von Bildvorlagen, welche die Anordnungsstruktur der teilflächigen Siegelschicht auf der Folienoberfläche wiedergeben. Die Bildvorlage liegt bevorzugt in Digitalform vor.

Das erfindungsgemäss hergestellte flexible Verpackungsmaterial wird bevorzugt verwendet zur Herstellung von siegelbaren Verpackungen, insbesondere Beutelverpackungen, wie Flachbeutel, Bodenbeutel, Standbeutel, Tüten, Kissenverpakkungen, Taschen, Säcke. Ferner kann der Folienverbund auch verwendet werden zur Herstellung von Warenträgern, Schachteln, Bodenteile von Durchdrückpackungen, Blisterpackungen oder Deckelmaterialien für Gefässe oder Warenträger.

Das mittels erfindungsgemässem Verfahren hergestellte flexible Verpackungsmaterial kann ferner eine Deckfolie, bsp. eine Durchdrückfolie oder eine abschälbare bzw. peelbare Deckfolie, einer Blisterpackung sein. Die Durchdrückfolie enthält vorzugsweise eine Folie aus Aluminium bzw. einer Aluminiumlegierung, nachfolgend vereinfachend Aluminiumfolie genannt. Die Durchdrückfolie kann eine Aluminiumfolie in hartem oder weichem Zustand sein. Die Aluminiumfolie kann bsp. aus Aluminium mit einer Reinheit von 98,6% oder höher sein. Ferner kann die Aluminiumfolie aus einer Aluminiumlegierung des Typs AA 8XXX, wie AA 8014, AA 8079, sein Die Aluminiumfolie kann bsp. in einer Dicke von 10 bis 100 µm, insbesondere von 15 bis 50 µm vorliegen.

Die Aluminiumfolie der besagten Durchdrückfolie enthält auf ihrer innen liegenden, d.h. dem Verpackungsinhalt zugewandten Seite, eine nach dem erfindungsgemässen Verfahren aufgebrachte Heisssiegelschicht. Die Heisssiegelschicht kann bsp. aus einem PVC (Polyvinylchlorid) oder aus einem Polyblend (Mischung) von PVC mit anderen Polymeren sein. Die Heisssiegelschicht kann ferner ein Copolymer des PVC, insbesondere ein Copolymer des PVC mit einem Acrylatharz, sein. Dem genannten Copolymer können ferner Zusätze wie Methyl- und/oder Buthylactylat beigemengt sein.

Zur Vermeidung von Reibkorrosion sind wenigstens die nicht durch die Siegelschicht bedeckten Flächenbereiche der Aluminiumfolie mit einer Vorbehandlungsschicht, vorzugsweise einer Vorbehandlungsschicht aus einem Polymer, wie einem Vorlack, beschichtet. Die Vorbehandlungsschicht kann auch vollflächig auf die Aluminiumfolie aufgebracht sein, wobei die Siegelschicht in diesem Fall auf der Vorbehandlungsschicht angeordnet ist.

Eine vollflächige Vorbehandlungsschicht der vorgenannten Art ist auch dann vorgesehen, wenn die Siegelschicht aus reinem PVC besteht, da dieses bekannterweise nur unzureichend auf einer Aluminiumoberfläche haftet.

Die aussen liegende, d.h. die vom Verpackungsinhalt abweisende Seite der Aluminiumfolie, enthält vorzugweise eine Vorbehandlungsschicht, bsp. in Form eines Primers oder Lackes, und darauf angeordnet eine Bedruckung. Anstelle einer Vorbehandlungsschicht kann auf der aussen liegenden Seite der Aluminiumfolie auch ein Kunststofffilm angeordnet sein und auf dem Kunststoffilm die Bedruckung. Über der Bedruckung kann ferner wahlweise ein Schutzlack bzw. Drucküberlack angeordnet sein.

Im folgenden wird die Erfindung beispielhaft und mit Bezug auf die beiliegenden Zeichnungen näher erläutert. Es zeigen:
- Fig. 1:: eine schematische Darstellung einer Produktionsvorrichtung zur Herstellung eines Verpackungsmaterials mit einer Siegelschicht;
- Fig. 2:: einen Querschnitt durch ein erfindungsgemäss hergestelltes Verpakkungsmaterial.

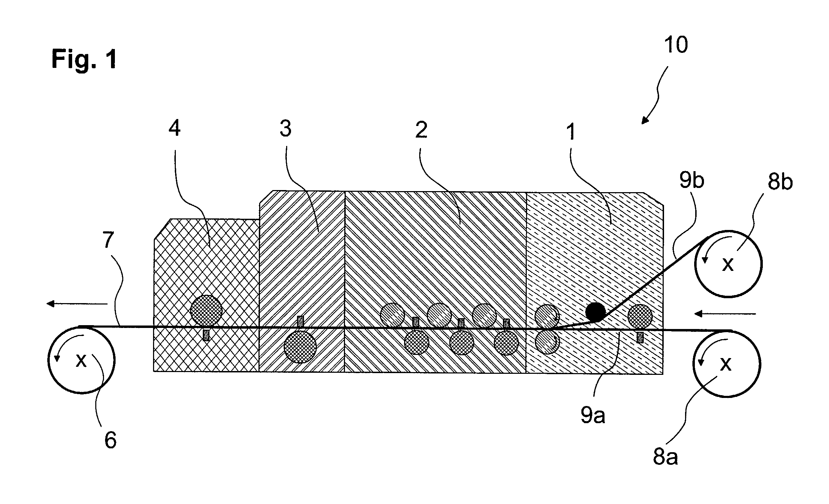

Die Produktionsvorrichtung 10 enthält eine Abwickelvorrichtung, eine Kaschierstation 1, eine Druckstation 2, eine Drucküberlackbeschichtungsstation 3 sowie eine Siegelschichtstation 4 und eine dieser nachgeordneten Aufwickelstation (siehe Fig. 1). Die Abwickelvorrichtung enthält zwei Folienrollen 8a, 8b, von welchen eine erste und zweite bahnförmige Folie oder Folienverbund 9a, 9b abgehaspelt und kontinuierlich der Kaschierstation 1 zugeführt werden. In der Kaschierstation 1 wird die erste Folie 9a gegen die zweite Folien 9b kaschiert.

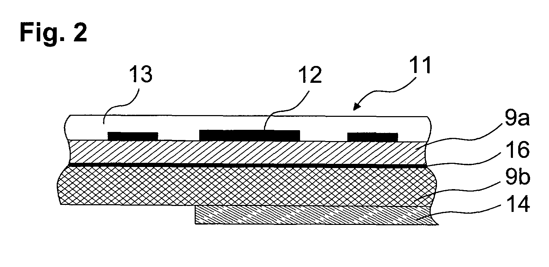

Der Folienverbund wird nachfolgend durch eine Druckstation 2 geführt, in welcher mittels eines elektrophotographischen Verfahrens eine Bedruckung 12 auf eine oder beide freien Oberflächen des Folienverbundes aufgebracht wird (siehe auch Fig. 2).

Im Anschluss an die Bedruckung wird der Folienverbund durch die der Druckstation 2 nachgeschalteten Drucküberlackbeschichtungsstation 3 geführt. In dieser wird ein Drucküberlack 13 voll- oder teilflächig auf die bedruckte Oberfläche des Folienverbundes aufgetragen.

An die Drucküberlackbeschichtungsstation 3 schliesst die Siegelschichtstation 4 an, in welcher auf der der Bedruckung 12 gegenüberliegenden freien Oberfläche eine Heisssiegelschicht 14 teilflächig aufgetragen wird.

Der Auftrag der Heisssiegelschicht 14 an der Siegelschichtstation 4 geschieht mittels eines elektrophotographischen Verfahrens. Der Siegelschichtstation 4 ist ferner eine Heizeinheit (nicht gezeigt) zugeordnet, in welchen die Heisssiegelschicht 14 zu einem auf der Folienoberfläche haftenden Siegelfilm geschmolzen und anschliessend verfestigt wird.

Der fertige Folienverbund 7 wird anschliessend zur weiteren Verarbeitung wieder auf eine Folienrolle 6 aufgehaspelt.

Ein mittels erfindungsgemässen Verfahren hergestellter Folienverbund 11 gemäss Fig. 2 enthält eine erste Folie 9a und eine zweite Folie 9b, welche gegenseitig über eine Klebstoffschicht 16 kaschiert sind. Auf einer ersten freien Oberfläche des Folienverbundes 11 ist eine Bedruckung 12 aufgebracht. Über die Bedruckung ist ein Drucküberlack 13 aufgetragen.

Auf der der Bedruckung 12 gegenüber liegenden freien Oberfläche des Folienverbundes 11 ist an den zu siegelnden Flächenabschnitten teilflächig eine Heisssiegelschicht 14 aufgetragen.

## Patentansprüche

1. Verfahren zur Herstellung eines flexiblen Verpackungsmaterials aus einer einoder mehrschichtigen Folie oder Folienverbund (7) enthaltend eine auf wenigstens einer freien Oberfläche der Folie oder des Folienverbundes (7) aufgebrachte Siegelschicht (14),
**dadurch gekennzeichnet, dass**
die Siegelschicht (14) teilflächig auf den zu siegelnden Flächenabschnitten aufgebracht wird, und der teilflächige Auftrag der Siegelschicht mittels eines elektrostatischen Beschichtungsverfahrens erfolgt, in welchem Beschichtungsteilchen elektrostatisch geladen und mittels Transfermitteln durch Anlegen eines elektrischen Feldes auf die zu beschichtende Folienoberfläche übertragen und zu einem Beschichtungsfilm in Form einer Siegelschicht aufgeschmolzen und anschliessend verfestigt werden.

2. Verfahren nach Anspruch 1, wobei die Siegelschicht mittels eines Verfahrens gemäss EMB-Technologie (Elektro-Magnetic-Brush-Technologie) unter Verwendung eines Zweikomponenten-Auftragssystems auf die Folie oder den Folienverbund aufgebracht wird.

3. Verfahren nach einem der Ansprüche 1 bis 2, wobei die Siegelschicht (14) mittels eines elektrophotographischen Verfahrens auf die Folie oder den Folienverbund (7) aufgebracht wird.

4. Verfahren nach einem der Ansprüche 1 bis 3, wobei die Beschichtungsteilchen der Siegelschicht (14) in Form von Trockenteilchen, insbesondere Pulverteilchen vorliegen.

5. Verfahren nach Anspruch 4, wobei die Beschichtungsteilchen der Siegelschicht (14) in Form eines Pulverlacks, insbesondere eines thermoplastischen Pulverlackes, vorliegen.

6. Verfahren nach einem der Ansprüche 1 bis 5, wobei die Siegelschicht (14) eine Heisssiegelschicht ist.

7. Verfahren nach einem der Ansprüche 1 bis 6, wobei die Beschichtungsteilchen der Siegelschicht (14) mittels Einsatz von elektronischen Datenverarbeitungsmitteln unter Ausbildung eines die zu siegelnden Flächenabschnitten wiedergebenden Beschichtungsbildes auf die Folie oder den Folienverbund (7) aufgetragen werden.

8. Verfahren nach einem der Ansprüche 1 bis 7, wobei die aufzutragenden Schichtdicken der Siegelschicht (14) durch Mittel zur elektronische Datenverarbeitung überwacht und/oder gesteuert werden.

9. Verfahren nach einem der Ansprüche 1 bis 8, wobei der Auftrag der Siegelschicht inline und kontinuierlich an einer Siegelschichtstation (4) einer Foliendurchlaufanlage (10) erfolgt.

10. Produktionsvorrichtung (10) zur Herstellung eines flexiblen Verpackungsmaterials aus einer ein- oder mehrschichtigen Folie oder Folienverbund (7) gemäss dem Verfahren nach einem der Ansprüche 1 bis 9, wobei die Produktionsvorrichtung (10) eine Foliendurchlaufanlage mit einer Siegelschichtstation (4) ist,
**dadurch gekennzeichnet, dass**
die Siegelschichtstation (4) als integrales Modul der Produktionsvorrichtung (10) inline angeordnet sind, und die Siegelschichtstation (4) Mittel zur teilflächigen Beschichtung der Folien oder des Folienverbundes (7) mittels eines elektrostatischen Beschichtungsverfahrens enthält.

11. Vorrichtung nach Anspruch 10, wobei die Mittel zur elektrostatischen Beschichtung Mittel zur elektrostatischen Aufladung von Beschichtungsteilchen und Mittel zum Transferieren der elektrostatisch geladenen Beschichtungsteilchen auf die zu beschichtende Folienoberfläche enthalten.

12. Vorrichtung nach einem der Ansprüche 10 bis 11, wobei die Mittel zum Transferieren der elektrostatisch geladenen Beschichtungsteilchen eine Transferwalze oder ein Transferband, auf welche die elektrostatisch geladenen Beschichtungsteilchen mittels elektrostatischen Kräften aufgebracht werden, und Mittel zum Anlegen eines elektrischen Feldes zur Übertragung der elektrostatisch geladenen Beschichtungsteilchen von der Transferwalze oder Transferband auf die zu beschichtende Folienoberfläche enthalten.

13. Vorrichtung nach einem der Ansprüche 10 bis 12, wobei der Siegelschichtstation (4) Mittel zur elektronischen Datenverarbeitung zum gezielten Auftrag und Steuerung eines teilflächigen Schichtauftrages und/oder zur Steuerung der Schichtdicken zugeordnet sind.

14. Vorrichtung nach einem der Ansprüche 10 bis 13, wobei der Siegelschichtstation (4) Mittel zur Bildverarbeitung für die Erzeugung eines die zu siegelnden Flächenabschnitte wiedergebenden Beschichtungsbildes zum gezielten teilflächigen Auftrag zugeordnet sind.

15. Vorrichtung nach einem der Ansprüche 10 bis 14, wobei die Bildverarbeitungsmittel Mittel zur elektronischen Datenverarbeitung (EDV), wie Bildverarbeitungsprogramme zur Herstellung von Bildvorlagen enthält, wobei die Daten der Bildvorlagen in digitaler Form vorliegen und die Siegelschichtstation (4) Mittel zur Beschichtung der Folien oder Folienverbundes mittels eines elektrophotographischen Verfahrens enthalten.

16. Vorrichtung nach einem der Ansprüche 10 bis 15, wobei die Siegelschichtstation (4) eine Heizeinheit zum Aufschmelzen der Beschichtung enthält.

17. Verwendung eines Folienverbundes (7) hergestellt nach dem Verfahren gemäss Anspruch 1, zur Herstellung von siegelbaren Verpackungen, insbesondere Beutelverpackungen, wie Flachbeutel, Bodenbeutel, Standbeutel, Tüten, Kissenverpackungen, Taschen, Säcke, Warenträger, Schachteln, Bodenteile von Durchdrückpackungen, Blisterpackungen, Deckelmaterialien für Gefässe oder Warenträger.
